# DEMANDE DE BREVET EUROPEEN

(11) **EP 4 186 782 A1**
(43) Date de publication de la demande: **31.05.2023**
(21) Numéro de dépôt: 22207224.1
(22) Date de dépôt: 14.11.2022
(51) Int. Cl.: B64C 1/40, B32B 18/00

(54) **BOUCLIER THERMIQUE COMPRENANT UNE PIÈCE PRINCIPALE ET AU MOINS UNE PIÈCE SECONDAIRE, EN PARTICULIER POUR UNE PARTIE D'UN AÉRONEF**

(30) Priorité: 30.11.2021 FR 2112698
(71) Demandeur: Airbus Operations SAS, 31060 Toulouse (FR)
(72) Inventeur: BELLANGER, Alexandre, 31060 TOULOUSE (FR); TONNELE, Arnaud, 31060 TOULOUSE (FR)
(74) Mandataire: Gevers & Orès

(57) **Abrégé**

- Bouclier thermique comprenant une pièce principale et au moins une pièce secondaire, en particulier pour une partie d'un aéronef.
- Le bouclier thermique (1) destiné en particulier à protéger une partie (2) d'un aéronef, par exemple au niveau d'un réservoir de carburant de l'aéronef, comporte une pièce principale (4) collée à ladite partie (2) et au moins une pièce secondaire (5) qui est rendue solidaire de façon amovible de la pièce principale (4), la pièce principale (4) et la pièce secondaire (5) étant réalisées dans au moins un matériau assurant à la fois une protection thermique et une protection contre le feu, ce qui permet d'obtenir un bouclier thermique (1) particulièrement efficace qui comprend au moins une pièce secondaire (5) amovible permettant un accès.

## Description

### Domaine technique

La présente invention concerne un bouclier thermique, en particulier pour une partie d'un aéronef,

### Etat de la technique

Bien que non exclusivement, la présente invention s'applique plus particulièrement à la réalisation d'un bouclier thermique au niveau d'un réservoir de carburant d'un aéronef. On sait que certains aéronefs tels que des avions de transport notamment, comportent des réservoirs situés dans une partie du fuselage de l'aéronef, dans lequel est directement intégré le carburant. À titre illustration, il peut s'agir d'un réservoir central arrière d'un avion de transport.

Dans ce cas, la structure de l'aéronef doit satisfaire des conditions très strictes en cas de feu à l'extérieur de l'aéronef, en particulier le feu ne doit pas traverser la structure de l'aéronef et la température à la surface interne du fuselage ne doit pas dépasser une température prédéterminée, généralement de l'ordre de 200°C.

Une partie du fuselage est généralement protégée par un carénage ventral. Toutefois, ce carénage ventral ne recouvre pas, en général, complètement la partie externe du fuselage au niveau du réservoir et il ne permet pas d'accéder à l'intérieur du fuselage.

Il existe donc un besoin de disposer d'une solution permettant d'apporter une protection à une partie du fuselage d'un aéronef, en particulier au niveau d'un réservoir de carburant, apte à satisfaire les conditions requises précitées.

### Exposé de l'invention

La présente invention concerne un bouclier thermique, en particulier pour une partie d'un aéronef, et notamment une partie du fuselage de l'aéronef au niveau d'un réservoir de carburant, permettant de répondre à ce besoin.

Pour ce faire, selon l'invention, le bouclier thermique comporte une pièce principale configurée pour pouvoir être collée et au moins une pièce secondaire qui est rendue solidaire, de façon amovible, de ladite pièce principale, et la pièce principale et la pièce secondaire sont réalisées dans au moins un matériau assurant, à la fois, une protection thermique et une protection contre le feu.

Dans un mode de réalisation particulier, le bouclier thermique comporte une pluralité de pièces secondaires rendues solidaires, de façon amovible, de la pièce principale.

Ainsi, grâce à l'invention, et comme précisé davantage ci-dessous, on obtient un bouclier thermique qui assure, à la fois, une protection thermique et une protection contre le feu, et ceci pour ses différentes pièces (la pièce principale et la ou les pièces secondaires) comme cela est requis dans les applications envisagées. De plus, grâce à la solidarisation amovible de la ou des pièces secondaires, une ouverture peut être créée dans le bouclier thermique par une désolidarisation de la ou des pièces secondaires, en particulier pour accéder à l'intérieur de la partie pourvue du bouclier thermique, notamment une partie d'un aéronef, par exemple pour réaliser une opération de maintenance ou de réparation.

Ledit bouclier thermique présente également d'autres avantages indiqués ci-après.

Avantageusement, la pièce principale est pourvue d'au moins un orifice au niveau duquel est agencée ladite pièce secondaire.

Dans un mode de réalisation particulier, au moins l'une des pièces principale et secondaire présente une structure générale de forme adaptée à des éléments particuliers, externes au bouclier thermique.

En outre, de façon avantageuse, la pièce secondaire est rendue solidaire de la pièce principale par l'intermédiaire de boulons liés uniquement auxdites pièces secondaire et principale.

Par ailleurs, avantageusement, le bouclier thermique comporte au moins une trappe d'accès.

La présente invention concerne également une partie d'aéronef, en particulier une partie du fuselage de l'aéronef, notamment au niveau d'un réservoir de carburant de l'aéronef, qui comporte au moins un bouclier thermique tel que celui décrit ci-dessus, qui est collé sur ladite partie de l'aéronef. La protection assurée à la partie protégée, par le bouclier thermique, n'est pas réduite par la fixation du bouclier par collage, le collage ne créant en effet pas d'ouvertures traversantes susceptibles d'atténuer l'efficacité de ladite protection.

En outre, avantageusement, ladite partie d'aéronef comprend au moins une zone à protéger et le bouclier thermique présente une surface et est collé sur ladite partie d'aéronef de manière à complètement couvrir et à déborder ladite zone à protéger.

Dans un mode de réalisation particulier, le bouclier thermique est également fixé, autour de sa périphérie, à ladite partie d'aéronef en dehors de la zone à protéger, par l'intermédiaire d'éléments de fixation traversants, réalisant une fixation supplémentaire.

La présente invention concerne également un aéronef, en particulier un avion de transport. Selon l'invention, ledit aéronef comporte au moins un bouclier thermique tel que celui décrit ci-dessus, et/ou au moins une partie d'aéronef telle que celle décrite ci-dessus.

### Brève description des figures

Les figures annexées feront bien comprendre comment l'invention peut être réalisée. Sur ces figures, des références identiques désignent des éléments semblables.
La figure 1 est une vue latérale schématique d'un aéronef pourvu d'un bouclier thermique.
La figure 2 est une vue partielle, schématique, agrandie et en perspective, d'une partie de l'aéronef de la figure 1, qui est pourvue du bouclier thermique.
La figure 3 est une vue schématique, en plan, d'un premier mode de réalisation d'un bouclier thermique.
La figure 4 est une vue schématique, en plan, d'une pièce principale du bouclier thermique de la figure 3.
La figure 5 est une vue schématique, en plan, d'un second mode de réalisation d'un bouclier thermique.
La figure 6 est une vue partielle, en coupe, d'une partie d'un fuselage d'aéronef, pourvue d'un bouclier thermique.

### Description détaillée

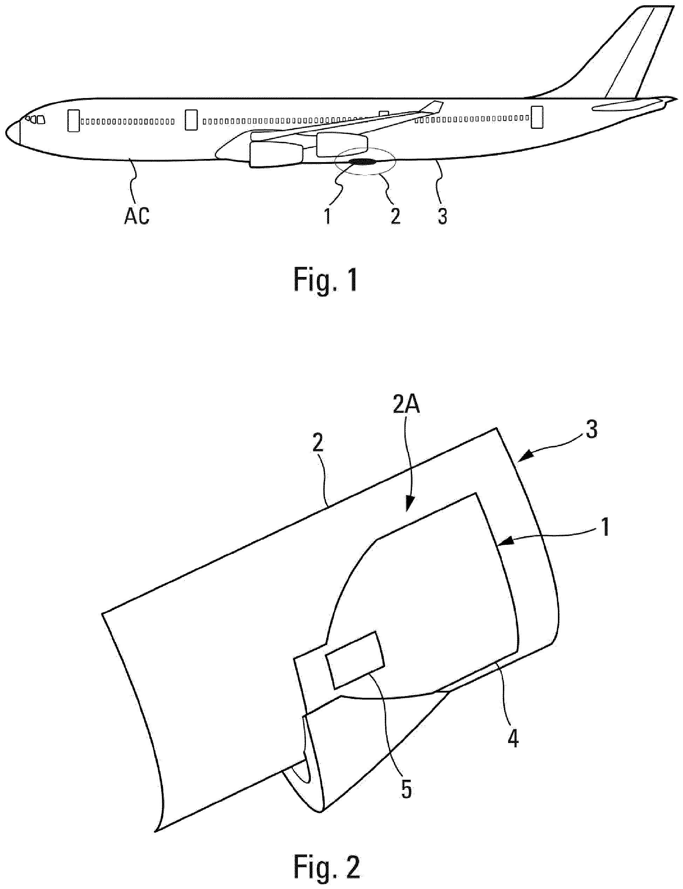

Le bouclier thermique 1 représenté schématiquement dans un mode de réalisation particulier sur les figures 2 à 4 et permettant d'illustrer l'invention est destiné à être monté sur une partie 2 de structure à protéger au moins partiellement comme précisé ci-dessus. De préférence, cette partie 2 est une partie d'un aéronef AC, en particulier d'un avion de transport, comme représenté sur la figure 1.

Dans un mode de réalisation préféré mais non limitatif, la partie 2 de l'aéronef AC (entourée sur la figure 1 et montrée en perspective sur la figure 2), qui est destinée à recevoir le bouclier thermique 1, est une partie du fuselage 3 de l'aéronef AC, notamment au niveau d'un réservoir de carburant (non représenté).

La partie de l'aéronef AC destinée à recevoir le bouclier thermique 1 peut correspondre à toute partie de l'aéronef AC devant être particulièrement protégée contre le feu et la chaleur, tout en permettant un accès. Le bouclier thermique 1 peut également être appliqué à une partie de structure d'un système ou d'un engin (notamment mobile) autre qu'un aéronef.

Le bouclier thermique 1 comporte une pièce principale 4. Cette pièce principale 4 est réalisée en un matériau assurant, à la fois, une protection thermique et une protection contre le feu, comme précisé ci-dessous.

Le bouclier thermique 1 comporte également au moins une pièce secondaire 5, 6.

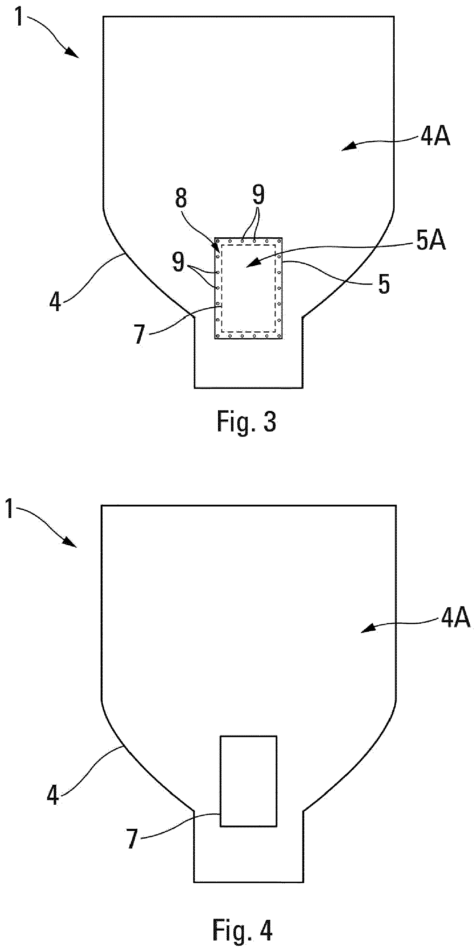

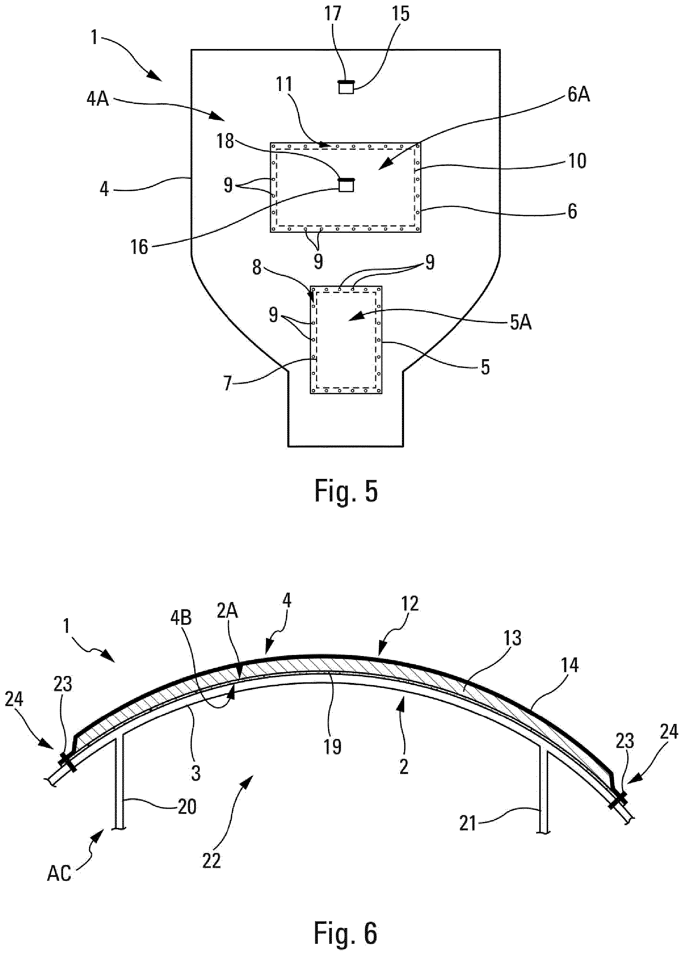

Dans le cadre de la présente invention, le bouclier thermique 1 peut comporter :
- une seule pièce secondaire 5, comme représenté dans le mode de réalisation des figures 2 et 3 ; ou
- une pluralité de pièces secondaires 5, 6, comme représenté dans le mode de réalisation de la figure 5.

Chacune des pièces secondaires 5 et 6 du bouclier thermique 1 est rendue solidaire, de façon amovible, de la pièce principale 4. Chacune de ces pièces secondaires 5 et 6 est également réalisée en un matériau assurant, à la fois, une protection thermique et une protection contre le feu.

Dans le cadre de la présente invention, on entend :
- par protection thermique, une protection permettant d'assurer que la température sur une surface (opposée à celle soumise à une source de chaleur) de la partie 2 à protéger ne dépasse pas une température prédéterminée, par exemple de l'ordre de 200°C ; et
- par protection contre le feu, une protection permettant d'empêcher le feu de traverser la partie 2 (pourvue du bouclier thermique 1).

On obtient, par conséquent, un bouclier thermique 1 qui assure à la fois une protection thermique et une protection contre le feu, et ceci pour l'ensemble de ses différentes pièces (la pièce principale 4 et la ou les pièces secondaires 5, 6).

De plus, grâce à la solidarisation amovible (c'est-à-dire qui peut être enlevée) de la ou des pièces secondaires 5, 6, une ouverture (traversante) peut être créée dans le bouclier thermique 1 par une désolidarisation de la ou des pièces secondaires 5, 6. Une telle ouverture permet d'accéder à l'intérieur de la partie 2 pourvue du bouclier thermique 1, notamment une partie d'un aéronef, par exemple pour une opération de maintenance.

Comme représenté sur la figure 4 qui montre uniquement la pièce principale 4, cette dernière est pourvue d'un orifice 7, au niveau duquel est agencée la pièce secondaire 5 pour obtenir le bouclier thermique 1 selon le mode de réalisation de la figure 3.

La pièce secondaire 5 présente une surface qui couvre complètement l'orifice 7 et qui déborde l'orifice 7 (localisé par des tirets sur la figure 3) par une zone dite périphérique 8 présentant une forme d'anneau rectangulaire.

De préférence, l'orifice 7 et la pièce secondaire 5 destinée à couvrir cet orifice 7 présentent une forme identique, par exemple carrée comme dans le mode de réalisation des figures 3 et 4, mais des tailles différentes. Bien entendu, tout type de forme est envisageable.

La pièce secondaire 5 est rendue solidaire de la pièce principale 4 au niveau de la zone périphérique 8.

Cette solidarisation est réalisée par des éléments de solidarisation 9 tels que des boulons, c'est-à-dire des ensembles vis et écrou. Les boulons présentent l'avantage de pouvoir être enlevés facilement pour séparer la pièce secondaire 5 de la pièce principale 4 si nécessaire. De préférence, cette solidarisation est uniquement réalisée à des points successifs formant par exemple un contour rectangulaire dans la zone périphérique 8, comme représenté sur la figure 3. De plus, chaque élément de solidarisation 9 est porté uniquement par le bouclier thermique 1, c'est-à-dire est lié uniquement à la pièce secondaire 5 et à la pièce principale 4, et non pas au fuselage de l'aéronef, ce qui permet d'éviter une transmission de chaleur dans le fuselage via les éléments de solidarisation 9.

Par ailleurs, dans le mode de réalisation de la figure 5, le bouclier thermique 1 comporte deux pièces secondaires 5 et 6. Il pourrait bien entendu comprendre plus de deux pièces secondaires. Dans cet exemple particulier, la pièce secondaire 5 est similaire à la pièce secondaire de la figure 3.

Quant à la pièce secondaire 6, elle présente une surface qui couvre complètement un orifice 10 de la pièce principale 4 et qui déborde l'orifice 10 (localisé par des tirets sur la figure 5) par une zone dite périphérique 11 présentant une forme d'anneau rectangulaire.

La pièce secondaire 6 est rendue solidaire, de façon amovible, de la pièce principale 4 au niveau de la zone périphérique 11. La solidarisation amovible est également réalisée par des éléments de solidarisation 9 tels que des boulons. De préférence, cette solidarisation est uniquement réalisée à des points successifs formant par exemple une ligne rectangulaire dans ladite zone périphérique 11. De plus, chaque élément de solidarisation 9 est porté uniquement par le bouclier thermique 1, c'est-à-dire est lié uniquement à la pièce secondaire 6 et à la pièce principale 4, et non au fuselage de l'aéronef, ce qui permet d'éviter une transmission de chaleur dans le fuselage via les éléments de solidarisation 9.

Grâce à la solidarisation amovible de la ou des pièces secondaires 5, 6, une ouverture peut être créée dans le bouclier thermique 1 suite à la désolidarisation de la ou des pièces secondaires 5, 6, notamment pour accéder à travers l'orifice 7, 10 correspondant, à l'intérieur de la partie 2 (en particulier de l'aéronef AC) pourvue du bouclier thermique 1.

Comme l'opération de désolidarisation nécessite, notamment, de retirer les éléments de solidarisation 9 (c'est-à-dire d'enlever les boulons dans le mode de réalisation préféré où les éléments de solidarisation 9 sont des boulons) et de déposer la pièce secondaire 5, 6, et est suivie d'une étape de réinstallation, il est prévu de ne la mettre en oeuvre que de façon occasionnelle, par exemple pour réaliser une réparation ou une maintenance.

Dans le cadre de la présente invention, le matériau (ou la structure de protection), par exemple un matériau composite, qui permet d'assurer une protection thermique et une protection contre le feu et qui est utilisé pour obtenir la pièce principale 4 et/ou la ou les pièces secondaires 5 et 6, peut être réalisé de différentes manières usuelles.

Dans un premier mode de réalisation, représenté sur la figure 6, la partie principale 4 du bouclier thermique 1 comporte une structure de protection 12 pourvue d'une couche de mousse 13, par exemple en silicone. La couche de mousse 13 est configurée pour assurer une protection thermique. La structure de protection 12 comporte, de plus, une peau 14 configurée pour assurer au moins une protection contre le feu, qui est agencée vers la face externe susceptible d'être soumise à un feu. Cette peau 14 peut être réalisée en différents matériaux et notamment correspondre à un panneau composite comprenant par exemple du verre, du carbone, de la céramique et/ou du titane ou une combinaison de céramique et de verre ou de céramique et de matériau à base de carbone. En variante, on peut également prévoir une lame d'air au lieu de la couche de mousse.

Par ailleurs, dans un second mode de réalisation (non représenté), le matériau (ou la structure de protection) comporte un empilement de couches superposées, ces couches étant aptes à assurer à la fois une protection thermique et une protection contre le feu. Ces couches superposées sont, par exemple, réalisées en céramique.

Par ailleurs, dans un mode de réalisation particulier :
- la pièce principale 4 présente une structure générale 4A de forme adaptée à des éléments particuliers, externes au bouclier thermique 1, qui se trouvent au niveau de la partie 2 ; et/ou
- la pièce secondaire 5 présente une structure générale 5A de forme adaptée à des éléments particuliers ; et/ou
- la pièce secondaire 6 présente une structure générale 6A de forme adaptée à des éléments particuliers.

On entend par structure générale de forme adaptée, le fait que la structure générale (ou la forme générale) 4A, 5A, 6A, notamment dans sa section transversale, de la plaque formant la pièce principale 4 ou la pièce secondaire 5, 6 considérée, présente une forme, par exemple partiellement bombée ou pourvue de gorges ou d'arêtes, qui est configurée pour s'adapter à des éléments particuliers, par exemple des câbles ou des systèmes, qui ne font pas partie du bouclier thermique 1 et qui se trouvent au niveau de la partie 2. En particulier, il peut s'agir d'éléments usuels qui sont installés à l'intérieur de l'aéronef et notamment, dans l'application à un réservoir de carburant, des éléments usuels qui sont installés à l'intérieur du réservoir de carburant.

Par ailleurs, dans un mode de réalisation particulier, le bouclier thermique 1 comporte également au moins une trappe d'accès 15, 16, comme représenté sur la figure 5. Une telle trappe d'accès 15, 16, de taille réduite, par exemple pour permettre une inspection visuelle ou une maintenance régulière, est optionnelle.

Dans l'exemple de la figure 5, le bouclier thermique 1 comporte une trappe d'accès 15 qui est installée dans la pièce principale 4. Cette trappe d'accès 15 est agencée au niveau d'un orifice (non représenté) qui est pratiqué dans la pièce principale 4. La trappe d'accès 15 est pourvue d'une charnière 17, ainsi que de moyens de verrouillage/déverrouillage usuels, non représentés, qui permettent d'ouvrir et de fermer ladite trappe d'accès 15 par pivotement.

De plus, dans l'exemple de la figure 5, le bouclier thermique 1 comporte également une trappe d'accès 16 qui est installée dans la pièce secondaire 6. Cette trappe d'accès 16 est agencée au niveau d'un orifice (non représenté) qui est pratiqué dans la pièce secondaire 6. La trappe d'accès 16 est pourvue d'une charnière 18, ainsi que de moyens de verrouillage/déverrouillage usuels, non représentés, qui permettent d'ouvrir et de fermer ladite trappe d'accès 16 par pivotement.

L'ouverture de l'une des trappes d'accès 15, 16 permet d'accéder au travers de l'orifice correspondant, à l'intérieur de la pièce (principale ou secondaire) considérée, par exemple pour des opérations de vérification de capteurs ou bien de relevé de mesures ou d'état de jauge. Les trappes d'accès 15, 16 peuvent, par exemple, être réalisées dans un plastique à renfort de fibres de graphite, de carbone ou de verre.

Le bouclier thermique 1 peut comporter une ou plusieurs trappes d'accès, prévues selon le mode de réalisation considéré, dans la pièce principale 4 et /ou dans l'une ou plusieurs des pièces secondaires 5, 6, en fonction notamment de la nécessité d'être en mesure de pouvoir réaliser des vérifications, en particulier visuelles.

La pièce principale 4 du bouclier thermique 1 est fixée par collage d'une face dite interne 4B, sur la face externe 2A de la partie 2 de l'aéronef AC. Dans l'exemple de la figure 6, la pièce principale 4 du bouclier thermique 1 est fixée à l'aide d'une colle 19, par exemple un mastic en silicone, un mastic dit d'étanchéité ou une colle à base d'époxy, sur la face externe 2A. De préférence, la colle 19 est appliquée sur toute la surface de la face interne 4B de la pièce principale 4 du bouclier thermique 1. Dans une variante de réalisation, il est également envisageable de prévoir le collage uniquement sur une ou plusieurs zones de la face interne 4B de la pièce principale 4 et pas sur toute la surface de cette face interne 4B.

La fixation par collage présente l'avantage de ne pas réduire la protection thermique générée par le bouclier thermique 1. En effet, on évite ainsi, en particulier, l'utilisation d'éléments de fixation tels que des rivets ou des vis qui sont traversants et conducteurs de chaleur et qui réduiraient les propriétés de protection thermique s'ils étaient utilisés pour réaliser la fixation.

Dans un premier mode de réalisation, la pièce principale 4 du bouclier thermique 1 est uniquement fixée par collage, à l'aide de la colle 19, sur la face externe 2A de la partie 2.

En outre, dans un second mode de réalisation représenté sur la figure 6, on prévoit, en plus d'un collage (tel que celui mis en œuvre dans le premier mode de réalisation) à l'aide de la colle 19, une fixation supplémentaire de la pièce principale 4. Cette fixation supplémentaire peut être réalisée, par exemple, par des éléments de fixation 23 tels que, de préférence, des rivets (ou bien des boulons). De préférence, cette fixation est uniquement réalisée à des points de fixation successifs situés le long d'une ligne prévue près du bord périphérique de la pièce principale 4.

De plus, dans une réalisation préférée, comme représenté sur la figure 6, la pièce principale 4 du bouclier thermique 1 présente une surface qui couvre complètement la partie à protéger (précisée ci-dessous) et qui déborde cette partie à protéger par une zone dite périphérique 24, et la fixation supplémentaire est réalisée dans cette zone périphérique 24.

Cette fixation supplémentaire permet de toujours maintenir le bouclier thermique 1 solidaire de la partie 2, notamment si pour une raison particulière le collage perdait de son efficacité.

Comme indiqué ci-dessus, dans une application préférée mais non limitative, la partie 2 de l'aéronef AC qui reçoit par le bouclier thermique 1, est une partie du fuselage 3 de l'aéronef AC, au niveau d'un réservoir de carburant 22 comme représenté sur la figure 6, et notamment une partie 2 du fuselage 3 non protégée par un carénage ventral. Le cas échéant, le bouclier thermique peut être collé au niveau d'au moins l'une de ses extrémités à un carénage ventral (non représenté).

Dans une telle application à un réservoir de carburant 22, par exemple un réservoir central arrière d'un avion de transport, l'une des pièces secondaires 5 et 6 (non représentées) du bouclier thermique 1 peut être positionnée pour permettre d'accéder à un système de pompage du réservoir de carburant 22 ou à un cheminement de câbles, en particulier pour des opérations (peu fréquentes) de maintenance ou de réparation, par exemple pour remplacer le système de pompage ou des câbles.

Sur la figure 6, on a représenté partiellement des parois latérales 20 et 21 du réservoir de carburant 22, le réservoir de carburant 22 étant situé entre ces parois latérales 20 et 21. Dans cet exemple, le bouclier 1 présente une surface qui couvre complètement la partie à protéger, à savoir la partie du fuselage 3 entre les parois latérales 20 et 21, et qui déborde cette partie à protéger, vers l'extérieur du réservoir à carburant 22 et donc des parois latérales 20 et 21, au niveau de la zone périphérique 24. Au niveau de cette zone périphérique 24 est réalisée la fixation supplémentaire à l'aide des éléments de fixation 23 traversants. Ces éléments de fixation 23 traversants, qui sont susceptibles d'atténuer la protection thermique sont donc situés à l'extérieur de la zone à protéger.

Dans le cadre de la présente invention, la partie de l'aéronef AC destinée à recevoir le bouclier thermique 1 peut correspondre à toute partie de l'aéronef AC devant être particulièrement protégée contre le feu et la chaleur. Par ailleurs, le bouclier thermique 1 peut également être appliqué à une partie d'un système ou d'un engin autre qu'un aéronef, qui nécessite une telle protection, tout en permettant un accès.

## Revendications

1. Bouclier thermique, en particulier pour une partie d'un aéronef, ledit bouclier thermique (1) comportant une pièce principale (4) configurée pour pouvoir être collée, la pièce principale (4) étant réalisée dans au moins un matériau assurant, à la fois, une protection thermique et une protection contre le feu,
**caractérisé en ce qu'**il comporte au moins une pièce secondaire (5, 6) qui est rendue solidaire, de façon amovible, de ladite pièce principale (4), **en ce que** ladite pièce principale (4) est pourvue d'au moins un orifice (7, 10) au niveau duquel est agencée la pièce secondaire (5, 6), et **en ce que** ladite pièce secondaire (5, 6) est réalisée dans au moins un matériau assurant, à la fois, une protection thermique et une protection contre le feu.

2. Bouclier thermique selon la revendication 1,
**caractérisé en ce que** la pièce secondaire (5) présente une surface qui couvre complètement l'orifice (7, 10) et qui déborde l'orifice (7, 10) par une zone périphérique (8).

3. Bouclier thermique selon l'une des revendications 1 et 2,
**caractérisé en ce qu'**au moins l'une des pièces principale et secondaire (4, 5, 6) présente une structure générale (4A, 5A, 6A) de forme adaptée à des éléments particuliers.

4. Bouclier thermique selon l'une quelconque des revendications précédentes,
**caractérisé en ce que** la pièce secondaire (5, 6) est rendue solidaire de la pièce principale (4) par l'intermédiaire de boulons (9) liés uniquement auxdites pièces secondaire et principale (4, 5, 6).

5. Bouclier thermique selon l'une quelconque des revendications précédentes,
**caractérisé en ce qu'**il comporte une pluralité de pièces secondaires (5, 6) rendues solidaires, de façon amovible, de la pièce principale (4).

6. Bouclier thermique selon l'une quelconque des revendications précédentes,
**caractérisé en ce qu'**il comporte au moins une trappe d'accès (15, 16).

7. Partie d'un aéronef, en particulier au niveau d'un réservoir de carburant de l'aéronef,
**caractérisée en ce qu'**elle comporte au moins un bouclier thermique (1) selon l'une quelconque des revendications 1 à 6, qui est collé sur ladite partie (2) de l'aéronef (AC).

8. Partie d'aéronef selon la revendication 7,
**caractérisée en ce qu'**elle comprend au moins une zone à protéger et **en ce que** le bouclier thermique (1) présente une surface et est collé sur ladite partie (2) de manière à complètement couvrir et à déborder ladite zone à protéger.

9. Partie d'aéronef selon la revendication 8,
**caractérisée en ce que** le bouclier thermique (1) est fixé, autour de sa périphérie, à ladite partie (2) en dehors de la zone à protéger, par l'intermédiaire d'éléments de fixation (23) traversants.

10. Aéronef,
**caractérisé en ce qu'**il comporte au moins un bouclier thermique (1) selon l'une quelconque des revendications 1 à 6 et/ou au moins une partie (2) d'aéronef (AC) selon l'une quelconque des revendications 7 à 9
